(19) Europäisches Patentamt
European Patent Office
Office européen des brevets

(11) **EP 4 407 972 B1**

(12) **EUROPEAN PATENT SPECIFICATION**

(45) Date of publication and mention
of the grant of the patent:
**30.07.2025 Bulletin 2025/31**

(21) Application number: **24153093.0**

(22) Date of filing: **22.01.2024**

(51) International Patent Classification (IPC):
***H04N 1/00*** (2006.01)

(52) Cooperative Patent Classification (CPC):
**H04N 1/00588; H04N 1/00602; H04N 1/00663;
H04N 1/00689; H04N 1/00713; H04N 1/00718;
H04N 1/00737; H04N 1/00745; H04N 1/00769;
H04N 1/00771**

(54) **READING DEVICE AND CONTROL METHOD OF READING DEVICE**

LESEVORRICHTUNG UND STEUERUNGSVERFAHREN FÜR LESEVORRICHTUNG

DISPOSITIF DE LECTURE ET PROCÉDÉ DE COMMANDE DE DISPOSITIF DE LECTURE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **24.01.2023 JP 2023008561**

(43) Date of publication of application:
**31.07.2024 Bulletin 2024/31**

(73) Proprietor: **Seiko Epson Corporation
Tokyo 160-8801 (JP)**

(72) Inventors:
• **MURAHASHI, Kenichi
Suwa-shi, 392-8502 (JP)**
• **KOYANAGI, Noriyuki
Suwa-shi, 392-8502 (JP)**
• **SHUTO, Ryoichi
Suwa-shi, 392-8502 (JP)**
• **NODA, Kazuhito
Suwa-shi, 392-8502 (JP)**

(74) Representative: **Lewis Silkin LLP
Arbor
255 Blackfriars Road
London SE1 9AX (GB)**

(56) References cited:
**US-A1- 2015 373 219   US-A1- 2016 037 008
US-A1- 2019 112 139**

EP 4 407 972 B1

**Description**

BACKGROUND

1. Technical Field

The present disclosure relates to a reading device that reads an image of a document and a control method of the reading device.

2. Related Art

For example, JP-A-2019-75600 is an example of an image reading device that scans an image of a document. The image reading device feeds a document set on a document support, which is an example of a placement section, by rotating a feed roller pair.

When the tilt angle of the document is greater than a threshold value, the image reading device determines that a skew error has occurred and stops operation. The image reading device changes the tilt angle, which is used to determine the occurrence of the skew error, according to the width of the document. In other words, when the document width is greater than the threshold value, the image reading device determines that the skew error has occurred at a smaller skew angle than when the document width is smaller than that threshold value.

For example, atypical documents such as receipts vary in length from document to document. If a long length document is skewed, the rear end of the document will be displaced greatly even if the tilt angle is small. The feed roller presses the document in the nip region and rotates to feed the document. When feeding multiple documents in sequence, if the side edge portion of the preceding document is displaced into the nip region, the subsequent document may contact the feed roller and skew before the preceding document has finished feeding.

US 2015/373219 discloses an image-reading device comprising a mask setting unit for setting mask region continuously and dynamically from target line to another target line on which detection of edge pixel ends in direction when edge pixel is included in edge image data.

SUMMARY

A reading device that solves the above problem includes a placement section on which a plurality of documents is placed; a feed roller that feeds the documents from the placement section; a separation section that separates the documents being fed by the feed roller; a reading section that scans the documents being transported in a transport direction; a control section that determines a transport error of the documents; and a detection section that detects the documents that are placed on the placement section; wherein assuming that a document fed first is a preceding document and that a document fed after the preceding document is a subsequent document, the control section performs a skew judgment, based on an image of the preceding document scanned by the reading section, which determines whether the side edge portion of the preceding document is displaced into a nip region sandwiched between the feed roller and the separation section, and determines a transport error when the side edge portion of the preceding document is determined to be displaced into the nip region and also the detection section detects the subsequent document.

A control method of the reading device that solves the above problem, the recording device including a placement section on which a plurality of document is placed, a feed roller that feeds the document from the placement section, a separation section that separates the document being fed by the feed roller, a reading section that scans the document being transported in a transport direction, and a detection section that detects the document that is placed on the placement section, the control method of the reading device includes, when assuming that a document fed first is a preceding document and that a document fed after the preceding document is a subsequent document, determining, based on an image of a preceding document scanned by the reading section, whether a side edge portion of the preceding document is displaced into a nip region sandwiched by the feed roller and the separation section and determining a transport error when the control section determines that the side edge portion of the preceding document is displaced into the nip region and also the detection section detects the subsequent document.

BRIEF DESCRIPTION OF THE DRAWINGS

FIG. 1 is a side view of one embodiment of a reading device.
FIG. 2 is a schematic diagram of a transport path as viewed in the vertical direction.
FIG. 3 is a schematic diagram of an image scanned at a tip end region.

FIG. 4 is a flowchart showing a determination routine.

FIG. 5 is a schematic view of a transport path of the reading device according to a modified example as viewed in the vertical direction.

## DESCRIPTION OF EMBODIMENTS

### EMBODIMENTS

Hereinafter, an embodiment of a reading device and a control method of the reading device will be described below with reference to figures. The reading device is, for example, a sheet-feed scanner in which a fixed reading section scans a document, such as paper-sheet or a film, being transported.

### Configuration of reading device

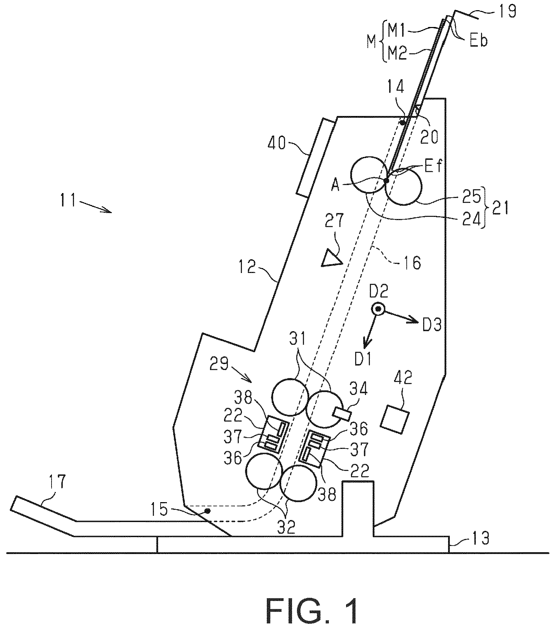

As shown in FIG. 1, the reading device 11 may be equipped with a housing 12 and a support section 13. The support section 13 supports the housing 12. The support section 13 is attached to the housing 12. The support section 13 is placed, for example, on a horizontal surface.

The housing 12 has two openings: a supply port 14 and a discharge port 15. The supply port 14 is an opening through which a document M is fed. Through the supply port 14, the document M is fed into the housing 12. The discharge port 15 is an opening through which the document M is discharged. The document M is discharged from the housing 12 through the discharge port 15.

The reading device 11 may be equipped with a transport path 16. The transport path 16 is the path along which the document M is transported. The transport path 16 extends through the housing 12. The transport path 16 extends from the supply port 14 toward the discharge port 15. The transport path 16 extends in the transport direction D1.

The reading device 11 may be equipped with a discharge tray 17. The discharge tray 17 is attached to the housing 12. The discharge tray 17 can pivot with respect to the housing 12, for example. The discharge tray 17 can be opened against the housing 12 to receive a document M. The discharge tray 17 receives the scanned document M. The discharge tray 17 receives the document M discharged from the discharge port 15.

The reading device 11 is equipped with a placement section 19, a detection section 20, a feed section 21, and a reading section 22. The placement section 19 is attached to the housing 12. A plurality of documents M can be placed on the placement section 19. "Placement" means to put something on the surface of it. A document M, which has not yet been scanned, is set on the placement section 19. The document M is set on the placement section 19 with a tip end Ef of the document M entering the supply port 14. When the document M is set on the placement section 19, the tip end Ef of the document M hits the feed section 21.

The detection section 20 detects the document M placed on the placement section 19. The detection section 20 may be, for example, a contact sensor with a lever, or a non-contact sensor such as an optical sensor.

The feed section 21 has a feed roller 24 and a separation section 25. The documents M placed on the placement section 19 are fed one by one in turn into the transport path 16 by the feed section 21. In this embodiment, any two of the multiple documents M that are fed consecutively are also referred to as a preceding document M1 and a subsequent document M2. The preceding document M1 is the document M that is fed first. Subsequent document M2 is the document M that is fed following the preceding document M1. If no distinction is made between the preceding document M1 and the subsequent document M2, the document is simply referred to as document M.

The feed roller 24 feeds the document M from the placement section 19. The feed roller 24 is driven and rotated. The feed roller 24 may be located at a position above the separation section 25. The feed roller 24 may be in contact with a front surface of the document M.

The separation section 25 separates the document M fed by the feed roller 24. The separation section 25 in this embodiment is a roller that separates the document M to one sheet at a time. The separation section 25 may contact the back surface of the document M.

The separation section 25 is composed of rollers that have a higher coefficient of friction against the document M than a coefficient of friction between the documents M, for example. The separation section 25 is subjected to a rotational load, for example, by a torque limiter. Therefore, in a case where the feed roller 24 and the separation section 25 sandwich multiple documents M, when the feed roller 24 drives and rotates, the separation section 25 is less likely to be driven and rotated. That is, the documents M are separated into single sheets by the feed roller 24 and the separation section 25. By this, the possibility of two overlapping documents M being transported is reduced.

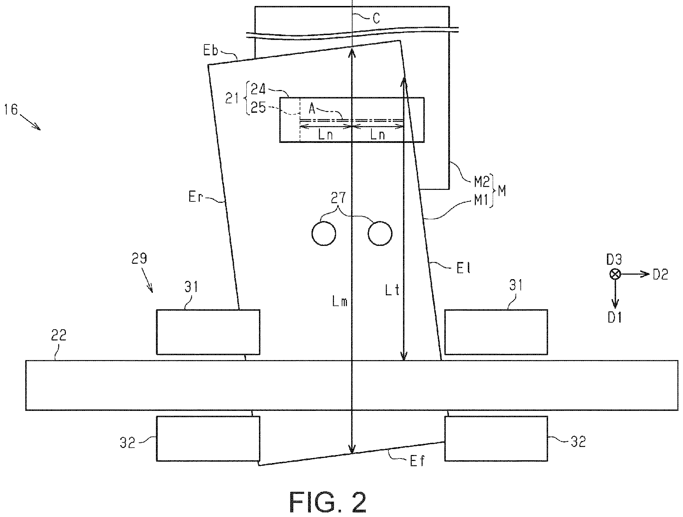

As shown in FIG. 2, the feed roller 24 and the separation section 25 may be located in the transport path 16 in the center of the scanning direction D2. In this embodiment, the center of the transport path 16 in the scanning direction D2 is indicated by a virtual center line C. The scanning direction D2 is a direction that intersects the transport direction D1. The scanning direction D2 is a width direction of the document M and is also an axial direction of the feed roller 24. The feed roller 24 and the separation section 25 sandwich the document M in a nip region A, shown in FIG. 2 as a single dotted line.

The nip region A is a region between the feed roller 24 and the separation section 25 in the vertical direction D3, which is perpendicular to the transport path 16. The nip region A is the region where the feed roller 24 and the separation section 25 contact each other in a state where there is no document M between the feed roller 24 and the separation section 25. The portion of the document M located in nip region A is sandwiched between the feed roller 24 and the separation section 25. The size of the nip region A in the scanning direction D2 may be the same as the smaller one of the feed roller 24 and the separation section 25. When the separation section 25 is smaller than the feed roller 24, the nip region A is from one end portion of the separation section 25 to the other end portion of the separation section in the scanning direction D2. The size of the nip region A in the scanning direction D2 is smaller than the smallest size document M that can be scanned by the reading device 11. The nip region A may be in the range in the scanning direction D2 of nip distance Ln from the virtual center line C.

As shown in FIG. 1, the reading device 11 may be equipped with a rear end detection section 27. The reading device 11 may be equipped with a plurality of rear end detection sections 27 provided side by side in the scanning direction D2. The rear end detection section 27 may be a sensor that detects the document M. The rear end detection section 27 detects a rear end Eb of the document M. The rear end detection section 27 may detect the tip end Ef of the document M. The rear end detection section 27 is, for example, an optical sensor. The rear end detection section 27 is provided, for example, between the feed roller 24 and the reading section 22 in the transport direction D1.

The reading device 11 may be equipped with a transport section 29. The transport section 29 is configured to transport the document M. The transport section 29 transports the document M along the transport path 16. The transport section 29 includes, for example, one or more rollers. The transport section 29 includes, for example, a first roller pair 31 and a second roller pair 32.

The first roller pair 31 and the second roller pair 32 are provided further downstream than is the feed section 21 in the transport direction D1. The first roller pair 31 and the second roller pair 32 are arranged, for example, along the transport path 16. The feed section 21, the first roller pair 31, and the second roller pair 32 in this embodiment are arranged in this order in the transport direction D1. The first and second roller pairs 31 and 32 transport the document M by the rollers of the first and second roller pairs 31 and 32 rotating in the state of sandwiching the document M.

The first roller pair 31 is located further upstream than is the reading section 22 in the transport direction D1. The second roller pair 32 is located further downstream than is the reading section 22 in the transport direction D1. The first roller pair 31 and the second roller pair 32 are located in the transport direction D1, sandwiching the reading section 22.

The reading device 11 may be equipped with a rotation detection section 34 that detects the rotation of the first roller pair 31. The rotation detection section 34 is, for example, a rotary encoder. The rotation detection section 34 may output the amount of rotation of the first roller pair 31 by detecting a scale on the encoder scale rotating with the first roller pair 31.

The reading device 11 may have one or more reading sections 22. The reading section 22 is configured to scan the document M. The reading section 22 scans the document M that is transported in the transport direction D1. The reading section 22 is accommodated in the housing 12.

The reading device 11 in this embodiment has two reading sections 22. The two reading sections 22 are located so as to sandwich the transport path 16. The two reading sections 22 are located between the first roller pair 31 and the second roller pair 32 in the transport path 16. The two reading sections 22 face each other. The reading section 22 is elongated in the scanning direction D2. If the scanning direction D2 is referred to as the main scanning direction, the transport direction D1 can be said to be the sub-scanning direction.

The two reading sections 22 scan different surfaces of the document M. One of the two reading sections 22 scans the front surface of the document M. The other of the two reading sections 22 scans the back surface of the document M. By this, the reading device 11 scans one side of the document M, or both sides of the document M.

The reading section 22 has, for example, a light source 36, a plurality of image sensors 37, and a background plate 38. The light source 36 is, for example, an LED or a fluorescent lamp. The light source 36 emits light toward the facing reading section 22. The light source 36 is, for example, elongated in the scanning direction D2.

The plurality of image sensors 37 are arranged in the scanning direction D2. The plurality of image sensors 37 are in a modular configuration. The image sensor 37 is, for example, a contact image sensor. Specifically, the image sensor 37 is a CMOS image sensor. The image sensor 37 converts a received light into a photoelectric signal. The image sensor 37 outputs an output value corresponding to the amount of received light.

The image sensor 37 may be a monochrome sensor or a color sensor. The reading section 22 may be configured to scan the document M in full color. For example, the reading section 22 may be configured to read the document M in the three colors of RGB. The reading section 22 may be configured to read the document M in gray scale.

The background plate 38, for example, faces the image sensor 37 and the light source 36 of the other reading section 22. The background plate 38 is irradiated with light from the light source 36 of the facing reading section 22. The background plate 38 reflects the irradiated light. The light reflected by the background plate 38 enters the image sensor 37 of the reading section 22 facing the background plate 38. The background plate 38 is scanned as a background together with the document M by the image sensor 37.

When the image sensor 37 scans the background plate 38 along with the document M, the background plate 38 desirably presents a color that enables distinguishing between the document M and the background plate 38. The background plate 38, for example, is a gray color.

The reading device 11 may be equipped with an operation section 40. The operation section 40 is attached to, for example, the housing 12. The operation section 40 is, for example, a touch panel. The operation section 40 accepts operations from the user. The operation section 40 is not limited to a touch panel, and may be, for example, buttons, switches, or the like.

The reading device 11 may be configured, for example, to accept operations from a terminal device that is communicatively connected to the reading device 11. The terminal device is, for example, a personal computer or a smartphone owned by the user.

The reading device 11 is equipped with a control section 42. The control section 42 comprehensively controls the drive mechanisms in the reading section 11 and controls the various operations performed by the reading section 11. The control section 42 can be configured as a circuit that includes α: one or more processors that execute various processes according to a computer program, β: one or more dedicated hardware circuits that execute at least some of the various processes, or γ: a combination thereof. The hardware circuit is, for example, an application specific integrated circuit. The processor includes a CPU and a memory such as a RAM and a ROM. The memory stores program code or instructions configured to cause the CPU to perform processing. The memory, that is, the computer-readable medium, includes any readable medium that can be accessed by a general purpose or dedicated computer.

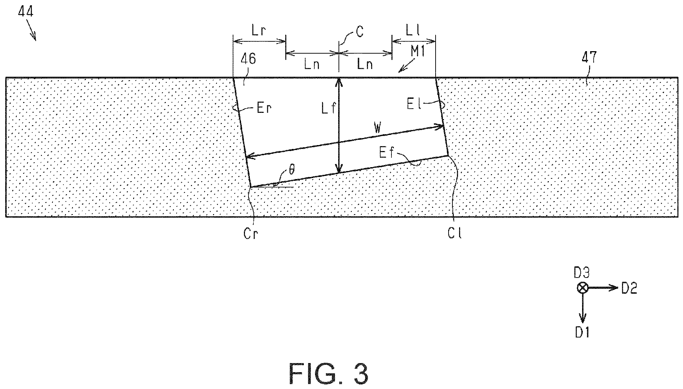

As shown in FIG. 3, the control section 42 obtains an image 44 of the tip end region of the preceding document M1 scanned by the reading section 22. In other words, the control section 42 obtains an image of the preceding document M1 scanned by the reading section 22. The control section 42 obtains data of the image 44 from the signal that is output from the reading section 22. The image 44 of the tip region includes the tip end Ef. The size of the image 44 of the tip end region in the transport direction D1 is smaller than that of the preceding document M1. In other words, the image 44 of the tip end region does not include the rear end Eb of the preceding document M1.

The image 44 includes a document region 46 and a background region 47. The document region 46 is a region where pixels are generated by scanning of the document M. The background region 47 is a region where pixels are generated by scanning of the background plate 38.

The control section 42 detects the document region 46 from the image 44. For example, the control section 42 detects the document region 46 by considering pixels that show luminance values included in a background range as the background region 47.

The control section 42 may calculate a tilt angle θ from the image 44. The tilt angle θ is the angle of the preceding document M1 with respect to the scanning direction D2. The tilt angle θ is an angle between the tip end Ef of the preceding document M1 and the scanning direction D2.

The control section 42 may calculate the right tip end distance Lr or the left tip end distance Ll from the image 44. Each of the right tip end distance Lr and the left tip end distance Ll is an example of a tip end distance. The right tip end distance Lr is the distance in the scanning direction D2 from the right side edge portion Er of the preceding document M1 to the nip region A. The left tip end distance Ll is a distance in the scanning direction D2 from the left side edge portion El of the preceding document M1 to the nip region A.

Each of the right side edge portion Er and the left side edge portion El is an example of a side edge portion. The right side edge portion Er is the side edge portion located on the right side of the document M as viewed in the transport direction D1 of the document M. The left side edge portion El is a side edge portion located on the left side of the document M as viewed in the transport direction D1 of the document M. When the downstream side corners of the document M in the transport direction D1 are viewed in transport direction D1, the right side corner is also referred to as a right tip corner Cr, and the left side corner is also referred to as a left tip corner Cl.

As shown in FIG. 3, when the document M is skewed to a position where the right tip corner Cr is located further downstream than is the left tip corner Cl in the transport direction D1, this is also referred to as "proceeding right-side first." In contrast, when the document M is skewed to a position where the left tip corner Cl is located further downstream than is the right tip corner Cr in the transport direction D1, this is also referred to as "proceeding left-side first."

In the case of preceding right-side first, the control section 42 calculates the left tip end distance Ll as the tip end distance. The left tip end distance Ll is the difference between the distance in the scanning direction D2 from the left side edge portion El to the virtual center line C and the nip distance Ln, at the downstream end of the image 44.

In the case of proceeding left-side first, the control section 42 calculates the right tip end distance Lr as the tip end distance. The right tip end distance Lr is the difference between the distance in the scanning direction D2 from the right side edge portion Er to the virtual center line C and the nip distance Ln, at the downstream end of the image 44.

The control section 42 may obtain the width W of the preceding document M1 from the image 44. The width W is the length from the right side edge portion Er to the left side edge portion El and parallel to the tip end Ef. The width W is also the length of the tip end Ef.

The control section 42 may calculate a preceding length Lf from the image 44. The preceding length Lf is a length along the virtual center line C from the tip end Ef to the downstream end of the image 44. As shown in FIG. 2, the control section 42 may calculate an allowable distance Lt. For example, the control section 42 calculates the allowable distance Lt based on the following formula:

$$\text{allowable distance Lt} = \text{tip end distance} / \tan(\text{tilt angle } \theta + \text{correction value B})$$

The tilt amount of the document M may change as it is transported. The correction value B is a value to compensate for the tilt amount that changes during transportation. Especially, a document M with a long length in the transport direction D1 tends to have a large difference between the tilt angle θ, which is formed by the scanning direction D2 and the tip end Ef, and the angle formed by the scanning direction D2 and the rear end Eb. Thus, the control section 42 corrects the tilt angle θ using an amount by which the tilt of the preceding document M1 is estimated to change during transportation. The control section 42 may correct the tip end distance using an amount by which the tilt of the preceding document M1 is estimated to change during transportation.

The control section 42 may obtain the document length Lm. The document length Lm is a length in the transport direction D1 from the tip end Ef to the rear end Eb. The control section 42 may obtain the document length Lm by using the image 44 and the detection result of the rear end detection section 27. The control section 42 may obtain the document length Lm based on the detection result of the rotation detection section 34. For example, the control section 42 may obtain from the rotation detection section 34 the distance that the preceding document M1 was transported from the time the image 44 was scanned to the time the rear end detection section 27 detects the rear end Eb, and then obtain the document length Lm by adding the distance from the reading section 22 to the rear end detection section 27 to the preceding length Lf.

Control method

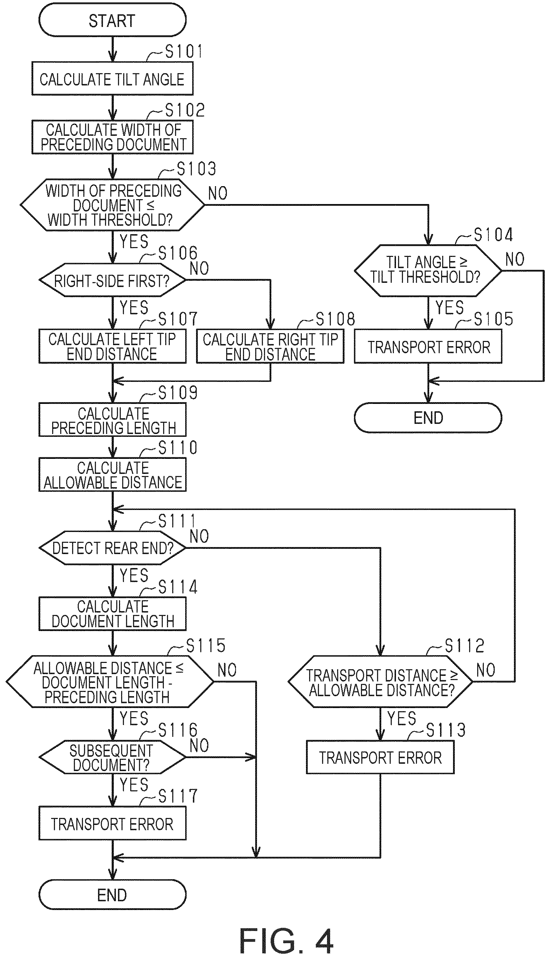

A control method of the reading device 11 will be described with reference to a flowchart shown in FIG. 4. The decision routine shown in FIG. 4 is executed at the timing when the reading section 22 has scanned the image 44 of the tip end region of the preceding document M1.

As shown in FIG. 4, in step S101, the control section 42 calculates the tilt angle θ from the image 44. In step S102, the control section 42 calculates the width W of the preceding document M1 from the image 44.

In step S103, the control section 42 compares the width W of the preceding document M1 with a width threshold value, which is an example of a threshold value. The width threshold value may be a preset value for the document M to be extracted. For example, when a receipt, an example of a document M, is to be extracted, the width threshold value may be set to 85 mm.

If the width W is less than or equal to the width threshold vale, step S103 becomes YES, and the control section 42 advances the process to step S106. If the width W is greater than the width threshold value, step S103 becomes NO, and the control section 42 advances the process to step S104. In step S104, the control section 42 compares the tilt angle θ with a tilt threshold value. The tilt threshold value may be a preset value, or it may be a value set according to the width W.

If the tilt angle θ is equal to or greater than the tilt threshold value, step S104 becomes YES, and the control section 42 advances the process to step 105. In step S105, the control section 42 determines a transport error and ends the process. If the tilt angle θ is smaller than the tilt threshold value, the step S104 becomes NO, and the control section 42 ends the process.

In step S106, the control section 42 determines whether the preceding document M1 is proceeding right-side first. If the preceding document M1 is proceeding right-side first, step S106 becomes YES, and the control section 42 advances the process to step S107. In step S107, the control section 42 calculates the left tip end distance Ll.

If the preceding document M1 is proceeding left-side first, step S106 becomes NO, and the control section 42 advances the process to step S108. In step S108, the control section 42 calculates the right tip end distance Lr.

In step S109, the control section 42 calculates the preceding length Lf from the image 44. In step S110, the control section 42 calculates the allowable distance Lt. In step S111, the control section 42 determines whether the rear end detection section 27 has detected the rear end Eb of the preceding document M1. If the rear end detection section 27 has not detected the rear end Eb, step S111 becomes NO, and the control section 42 advances the process to step S112.

In step S112, the control section 42 determines whether the transport distance that the preceding document M1 was transported after the image 44 was scanned is equal to or greater than the allowable distance Lt. If the transport distance is equal to or greater than the allowable distance Lt, step S112 becomes YES, and the control section 42 advances the process to step S113. In step S113, the control section 42 determines a transport error and ends the process. If the transport distance is less than the allowable distance Lt, step S112 becomes NO, and the control section 42 advances the process to step S111.

If the rear end detection section 27 detects the rear end Eb of the preceding document M1, step S111 becomes YES, and the control section 42 advances the process to step S114. In step S114, the control section 42 calculates the document length Lm.

In step S115, the control section 42 compares the difference between the document length Lm and the preceding length Lf with the allowable distance Lt. If the allowable distance Lt is longer than the difference between the document length Lm and the preceding length Lf, step S115 becomes NO, and the control section 42 ends the process. If the allowable distance Lt is equal to or less than the difference between the document length Lm and the preceding length Lf, step S115 becomes YES, and the control section 42 advances the process to step S116.

In step S116, the control section 42 determines whether there is a subsequent document M2. That is, if the detection section 20 does not detect a document M placed on the placement section 19, the control section 42 determines that there is no subsequent document M2. If there is no subsequent document M2, step S116 becomes NO, and the control section 42 ends the process.

If the detection section 20 detects a document M placed on the placement section 19, the control section 42 determines that there is a subsequent document M2. If there is a subsequent document M2, step S116 becomes YES, and the control section 42 advances the process to step S117. In step S117, the control section 42 determines a transport error and ends the process.

Operations of embodiment

The operations of this embodiment will be described.

The control section 42 determines whether the right side edge portion Er or the left side edge portion El of the preceding document M1 is displaced into the nip region A, based on the image 44. This determination is also referred to as a skew judgment. Specifically, the control section 42 performs the skew judgment based on the tilt angle $\theta$ and the tip end distance. The control section 42 calculates the allowable distance Lt based on the tilt angle $\theta$ and the tip end distance.

The control section 42 may perform the skew judgment based on the document length Lm. If the allowable distance Lt is equal to or less than the difference between the document length Lm and the preceding length Lf, the control section 42 determines that the right side edge portion Er or the left side edge portion El is displaced into the nip region A. If the allowable distance Lt is longer than the difference between the document length Lm and the preceding length Lf, the control section 42 determines that the right side edge portion Er and the left side edge portion El are not displaced into the nip region A.

If the transport distance that the preceding document M1 was transported after the image 44 was scanned is equal to or greater than the allowable distance Lt, the control section 42 determines that the right side edge portion Er or the left side edge portion El is displaced into the nip region A. If the transport distance is less than the allowable distance Lt, the control section 42 determines that the right side edge portion Er and the left side edge portion El are not displaced into the nip region A. When the control section 42 determines that the right side edge portion Er and the left side edge portion El are not displaced into the nip region A, the control section 42 feeds the subsequent document M2.

The control section 42 may perform the skew judgment before the rear end detection section 27 detects the rear end Eb of the preceding document M1. In other words, the control section 42 may perform the skew judgment in step S112 before the rear end Eb is detected in the determination routine of step S111.

The control section 42 may perform the skew judgment at the timing when the rear end detection section 27 detects the rear end Eb of the preceding document M1. In other words, the control section 42 may perform the skew judgment in step S115 when the rear end Eb is detected in the determination routine of step S111.

If the control section 42 determines that the width W of the preceding document M1 is equal to or less than the width threshold value, the control section 42 may perform the skew judgment. In other words, the control section 42 may perform the skew judgment in step S112 or step S115 if the width W is less than the width threshold value in the determination routine of step S103.

The control section 42 determines a transport error of the document M. Specifically, the control section 42 determines a transport error when the control section 42 determines that the right side edge portion Er or the left side edge portion El of the preceding document M1 is displaced into the nip region A and also the detection section 20 detects the subsequent document M2.

If the control section 42 determines a transport error, the control section 42 may stop the drive of the feed section 21 and transport section 29. If the control section 42 determines that the right side edge portion Er or the left side edge portion El of the preceding document M1 is displaced into the nip region A but does not detect the subsequent document M2, the control section 42 may discharge the preceding document M1 to the discharge tray 17. Effects of embodiment

Effects of this embodiment will be described.

1-1. When the control section 42 determines that the right side edge portion Er or the left side edge portion El of the preceding document M1 is displaced into the nip region A and also the detection section 20 detects the subsequent document M2, the control section 42 determines a transport error. In other words, the control section 42 determines a transport error when there is a possibility that the subsequent document M2 may have contacted the feed roller 24 while the preceding document M1 is being fed. Therefore, it is possible to suppress the subsequent document M2 from being transported in a skewed state.

1-2. The control section 42 performs the skew judgment based on the image 44 of the tip end region of the preceding document M1. Therefore, the skew judgment can be performed at earlier timing than, for example, timing when the skew judgment is performed based on the entire image of the preceding document M1.

1-3. The control section 42 calculates the tilt angle $\theta$ and the tip end distance from the image 44 of the tip end region of the preceding document M1. Therefore, the load on the control section 42 can be reduced compared to, for example, calculating the tilt angle $\theta$ and tip end distance from the entire image of the preceding document M1.

1-4. The tilt amount of the document M may change during the transportation of the document M. In particular, for a long document M, the difference between the tilt angle $\theta$ at the tip end Ef and the tilt angle at the rear end Eb may become large. In this regard, the control section 42 corrects the tilt angle $\theta$ using the amount by which the tilt of the preceding document M1 is estimated to change. Therefore, the accuracy of skew judgment can be improved.

1-5. The control section 42 obtains the document length Lm based on the image 44 of the tip end region of the preceding document M1 and the detection result of the rear end detection section 27, and then performs skew judgment based on the obtained document length Lm. Therefore, the skew judgment can be performed at earlier timing compared to, for example, timing when the skew judgment is performed by obtaining the document length Lm from the image scanned by the reading section 22.

1-6. The control section 42 performs the skew judgment at the timing when the rear end detection section 27 detects the rear end Eb of the preceding document M1. The rear end detection section 27 is provided between the feed roller 24 and the reading section 22. In other words, in this configuration, the rear end detection section can detect the rear end Eb of the document M earlier than, for example, detecting the rear end Eb of the document M from the image 44 scanned by the reading section 22. Therefore, the control section 42 can perform the skew judgment earlier timing.

1-7. A document M with a narrow width W is more likely to cause the right side edge portion Er or the left side edge portion El to be displaced into the nip region A than a document M with a wide width. The control section 42 performs the skew judgment when it determines that the width W of the preceding document M1 is less than or equal to the threshold value. Therefore, the skew judgment can be performed efficiently.

Modifications

This embodiment can be modified as follows. This embodiment and the following modifications can be implemented in combination with each other within a range that is not technically contradictory.

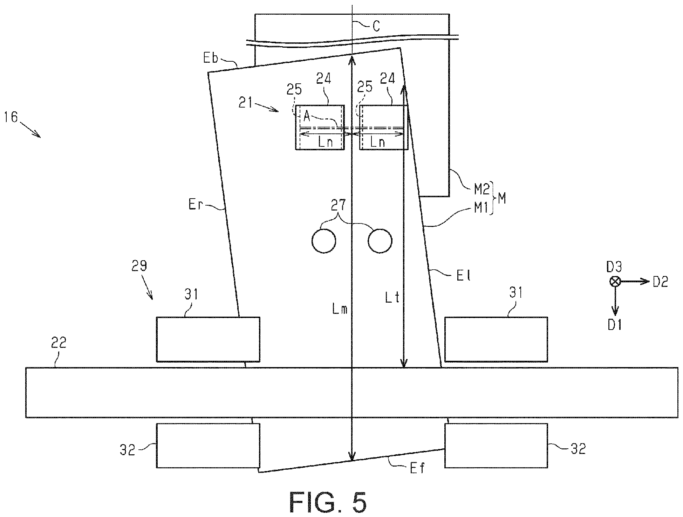

- As shown in FIG. 5, the feed section 21 may have a plurality of feed rollers 24. The plurality of feed rollers 24 may be provided side by side in the scanning direction D2. The feed section 21 may have a plurality of separation sections 25 corresponding to the plurality of feed rollers 24. The number of the feed rollers 24 and the separation sections 25 may be different. For example, one separation section 25 may correspond to two feed rollers 24. For example, a document M may be sandwiched between one feed roller 24 and two separation sections 25. When at least one of the feed roller 24 and the separation section 25 is divided into multiple sections, the nip region A is, as viewed in the transport direction D1, from a right edge of a region where the rightmost feed roller 24 and the separation section 25 contact each other to a left edge of a region where the leftmost feed roller 24 and the separation section 25 contact each other.
- If the control section 42 determines a transport error, the control section 42 may rotate the multiple feed rollers 24 at different rotation speeds. For example, in the case of proceeding right-side first, the rotational speed of the left side feed roller 24 may be made faster than that of the right side feed roller 24.
- The feed roller 24 may contact the back surface of the document M. The separation section 25 may contact the front surface of the document M. That is, the feed roller 24 may be provided below the transport path 16, and the separation roller may be provided above the transport path 16.
- The separation section 25 may be a pad that sandwiches the document M between the feed roller 24 and the pad.

- The control section 42 may obtain a position of the rear end Eb of the preceding document M1 from the image scanned by the reading section 22. The control section 42 may calculate the tilt angle $\theta$, the width W, the preceding length Lf, the document length Lm, and the allowable distance Lt from the image including the tip end Ef and the rear end Eb of the preceding document M1. The control section 42 may perform the skew judgment based on the position of the rear end Eb of the preceding document M1, which is obtained from the image. In this case, the reading device 11 may be configured without the rear end detection section 27. The control section 42 may perform the skew judgment at the timing when the reading section 22 has scanned the rear end Eb of the preceding document M1. In other words, the control section 42 may execute the determination routine at the timing when the reading section 22 has scanned the rear end Eb of the preceding document M1. The control section 42 obtains a position of the rear end Eb of the preceding document M1 from the image of the preceding document M1 scanned by the reading section 22. Therefore, the rear end Eb of the preceding document M1 can be detected with a simplified configuration compared to, for example, installing a separate sensor to detect the rear end Eb.

- The control section 42 may calculate from the image scanned by the reading section 22 the distances in the scanning direction D2 from right edge of the rear end Eb to the virtual center line C and from left edge of the rear end Eb to the virtual center C. If each of the calculated distances is longer than the nip distance Ln, the control section 42 may determine that the right side edge portion Er and the left side edge portion El are not displaced into the nip region A. The control section 42 may calculate the allowable distance Lt when the calculated distance is equal to or less than the nip distance Ln.

- The control section 42 may perform the skew judgment without considering the width W of the preceding document M1.

    - The rear end detection section 27 may be located further downstream than is the reading section 22 in the transport direction D1, or may be located further upstream than is the reading section 22 in the transport direction D1 and further downstream than is the first roller pair 31 in the transport direction D1.

- The control section 42 may calculate the tilt angle $\theta$, the right tip end distance Lr, and the left tip end distance Ll without considering the amount by which the tilt of the preceding document M1 is estimated to change during transportation. The control section 42 may calculate the allowable distance Lt without using the correction value B.

- When the document M is rectangular, the tilt angle of the right side edge portion Er with respect to the transport direction D1, the tilt angle of the left side edge portion El with respect to the transport direction D1, and the tilt angle $\theta$ of the tip end Ef with respect to the scanning direction D2 are the same. Therefore, the control section 42 may calculate the tilt angle of the right side edge portion Er or the left side edge portion El with respect to the transport direction D1 from the image of the preceding document M1, and then perform the skew judgment based on the calculated tilt angle.

- If the control section 42 determines that the tilt angle $\theta$ calculated in step S101 is greater than a predetermined threshold value, the control section 42 may slow down the transport speed. This configuration can shorten the time required for the control section 42 to stop the transportation of the preceding document M1 after determining that there is a transport error. As a result, the subsequent document M2 can be suppressed from being transported in a skewed state.

- When the control section 42 determines that the tilt angle $\theta$ is less than the predetermined threshold value before determining a transport error or when the control section 42 determines a transport error, the control section 42 may reverse the rotation of the feed roller 24 and the transport section 29. The control section 42 may transport the document M in the opposite direction of the transport direction D1, and then transport the document M in the transport direction Dd1. According to this configuration, by correcting the skew of the preceding document M1, it is possible to suppress the displacement of the right side edge portion Er or left side edge portion El of the preceding document M1 into the nip region A.

- The user may set whether or not to perform the skew judgment.

    - The user may input a type of document M. The control section 42 may perform the skew judgment when a particular document M is set.

- The document M may be selected arbitrarily, including receipts, bookmarks, ribbons, strips of paper, chopstick bags, noshifuda (gift tag), tag paper, and naming tags.

    - The reading device 11 may be a multifunctional device or a copying device mounted on a recording device such as a printer.

Definition

The phrase "at least one" as used in this specification means "one or more" of the desired options. As an example, if the number of options is two, the phrase "at least one" as used in this specification means "only one option" or "both of the two options". As another example, if the number of options is three or more, the phrase "at least one" as used in this specification means "only one option" or "any combination of two or more options".

Note

Hereinafter, technical ideas grasped from the above-described embodiment and modifications, and operations and effects thereof, will be described.

(A) A reading device includes a placement section on which a plurality of documents is placed; a feed roller that feeds the documents from the placement section; a separation section that separates the documents being fed by the feed roller; a reading section that scans the documents being transported in a transport direction; a control section that determines a transport error of the documents; and a detection section that detects the documents that are placed on the placement section; wherein assuming that a document fed first is a preceding document and that a document fed after the preceding document is a subsequent document, the control section performs a skew judgment based on an image of the preceding document scanned by the reading section, the skew judgment determining whether a side edge portion of the preceding document is displaced into a nip region sandwiched between the feed roller and the separation section and determines a transport error when the side edge portion of the preceding document is determined to be displaced into the nip region and also the detection section detects the subsequent document.

According to this configuration, when the control section determines that the side edge portion of the preceding document is displaced into the nip region and also the detection section detects the subsequent document, the control section determines a transport error. In other words, the control section determines a transport error when there is a possibility that a subsequent document came into contact with the feed roller during feeding the preceding document. Therefore, it is possible to suppress the subsequent document from being transported in a skewed state.

(B) The above reading device may be configured such that the control section performs the skew judgment based on an image of a tip end region of the preceding document scanned by the reading section.

According to this configuration, the control section performs the skew judgment based on the image of the tip end region of the preceding document. Therefore, the skew judgment can be performed at earlier timing than, for example, timing when the skew judgment is performed based on the entire image of the preceding document.

(C) The above reading device may be configured such that the control section calculates, based on the image of the tip end region of the preceding document, a tilt angle of the preceding document with respect to the scanning direction and a tip end distance in the scanning direction which is from the side edge portion of the preceding document to the nip region, and then performs the skew judgment based on the tilt angle and the tip end distance.

According to this configuration, the control section calculates the tilt angle and tip end distance from the image of the tip end region of the preceding document. Therefore, the load on the control section can be reduced compared to, for example, calculating the tilt angle and tip end distance from the entire image of the preceding document.

(D) The above reading device may be configured such that the control section corrects the tilt angle of the preceding document using an amount by which the tilt of the preceding document is estimated to change. The tilt amount of the document may change during the transportation of the document. In particular, for a long document, the difference between the tilt angle at the tip end and the tilt angle at the rear end may become large. In this regard, according to this configuration, the control section corrects the tilt angle using the amount by which the tilt of the preceding document is estimated to change. Therefore, the accuracy of skew judgment can be improved.

(E) The above reading device may be configured such that further including a rear end detection section that is provided between the feed roller and the reading section in the transport direction and that detects a rear end of the document, wherein the control section obtains a document length, which is a length of the preceding document in the transport direction from a tip end to the rear end of the preceding document, based on an image of a tip end region of the preceding document scanned by the reading section and a detection result of the rear end detection section and performs the skew judgment based on the document length.

According to this configuration, the control section obtains the document length based on the image of the tip end region of the preceding document and the detection result of the rear end detection section, and then performs skew judgment based on the obtained document length. Therefore, the skew judgment can be performed at earlier timing compared to, for example, obtaining the document length from the image read by the reading section.

(F) The above reading device may be configured such that the reading device further includes a rear end detection section that is provided between the feed roller and the reading section in the transport direction and that detects a rear end of the document, wherein the control section performs the skew judgment at timing when the rear end detection section detects the rear end of the preceding document.

According to this configuration, the control section performs the skew judgment at the timing when the rear end detection section detects the rear end of the preceding document. The rear end detection section is provided between the feed roller and the reading section. In other words, the rear end detection section can detect the rear end of the document earlier than, for example, detecting the rear end of the document from the image scanned by the reading section. Therefore, the control section can perform the skew judgment earlier.

(G) The above reading device may be configured such that the control section obtains a position of a rear end of the preceding document based on an image scanned by the reading section and performs the skew judgment based on the position of the rear end of the preceding document.

According to this configuration, the control section obtains the position of the rear end of the preceding document from the image of the preceding document scanned by the reading section. Therefore, the rear end of the preceding document can be detected with a simplified configuration compared to, for example, installing a separate sensor to detect the rear end.

(H) The above reading device may be configured such that the control section obtains a width of the preceding document from an image of the preceding document scanned by the reading section, and if the width is determined to be less than or equal to a threshold value, the control section performs the skew judgment.

A document with a narrow width is more likely to cause the side edge portion to be displaced into the nip region A than a document with a wide width. According to this configuration, the control section performs the skew judgment when it determines that the width of the preceding document is less than or equal to the threshold value. Therefore, the skew judgment can be performed efficiently.

(I) A control method of a reading device, the reading device including a placement section on which a plurality of document is placed, a feed roller that feeds the document from the placement section, a separation section that separates the document being fed by the feed roller, a reading section that scans the document being transported in a transport direction, and a detection section that detects the document that is placed on the placement section, the control method of the reading device includes, when assuming that a document fed first is a preceding document and that a document fed after the preceding document is a subsequent document, determining, based on an image of a preceding document scanned by the reading section, whether a side edge portion of the preceding document is displaced into a nip region sandwiched by the feed roller and the separation section and determining a transport error when the control section determines that the side edge portion of the preceding document is displaced into the nip region and also the detection section detects the subsequent document.

According to this method, it is possible to achieve the same effect as that of the reading device.

## Claims

1. A reading device, comprising:

   a placement section on which a plurality of documents is placed;
   a feed roller that feeds the documents from the placement section;
   a separation section that separates the documents being fed by the feed roller;
   a reading section that scans the documents being transported in a transport direction;
   a control section that determines a transport error of the documents; and
   a detection section that detects the documents that are placed on the placement section; wherein
   when assuming that a document fed first is a preceding document and that a document fed after the preceding document is a subsequent document,
   **characterized in that**:
   the control section

   performs a skew judgment based on an image of the preceding document scanned by the reading section, the skew judgment determining whether a side edge portion of the preceding document is displaced into a nip region sandwiched between the feed roller and the separation section and
   determines a transport error when the side edge portion of the preceding document is determined to be displaced into the nip region and also the detection section detects the subsequent document.

2. The reading device according to claim 1, wherein
   the control section performs the skew judgment based on an image of a tip end region of the preceding document scanned by the reading section.

3. The reading device according to claim 2, wherein
   the control section

   calculates, based on the image of the tip end region of the preceding document, a tilt angle of the preceding document with respect to a scanning direction and a tip end distance in the scanning direction from the side edge portion of the preceding document to the nip region and

11

performs the skew judgment based on the tilt angle and the tip end distance.

4.  The reading device according to claim 3, wherein
    the control section corrects the tilt angle using an amount by which the tilt angle of the preceding document is estimated to changes during transportation.

5.  The reading device according to claim 1, further comprising:

    a rear end detection section that is provided between the feed roller and the reading section in the transport direction and that detects a rear end of the document, wherein
    the control section

    obtains a document length, which is a length of the preceding document in the transport direction from a tip end to the rear end of the preceding document, based on an image of a tip end region of the preceding document scanned by the reading section and a detection result of the rear end detection section and performs the skew judgment based on the document length.

6.  The reading device according to claim 1, further comprising:

    a rear end detection section that is provided between the feed roller and the reading section in the transport direction and that detects a rear end of the document, wherein
    the control section performs the skew judgment at a timing when the rear end detection section detects the rear end of the preceding document.

7.  The reading device according to claim 1, wherein
    the control section

    obtains a position of a rear end of the preceding document based on an image scanned by the reading section and performs the skew judgment based on the position of the rear end of the preceding document.

8.  The reading device according to claim 1, wherein
    the control section obtains a width of the preceding document from an image of the preceding document scanned by the reading section and, when the width is determined to be less than or equal to a threshold value, the control section performs the skew judgment.

9.  A control method of a reading device,
    the reading device including

    a placement section on which a plurality of documents is placed,
    a feed roller that feeds the documents from the placement section,
    a separation section that separates the documents being fed by the feed roller,
    a reading section that scans the documents being transported in a transport direction, and
    a detection section that detects the documents that are placed on the placement section,

    the control method of the reading device comprising:

    when assuming that a document fed first is a preceding document and that a document fed after the preceding document is a subsequent document,
    determining, based on an image of a preceding document scanned by the reading section, whether a side edge portion of the preceding document is displaced into a nip region sandwiched by the feed roller and the separation section and
    determining a transport error when the control section determines that the side edge portion of the preceding document is displaced into the nip region and also the detection section detects the subsequent document.

**Patentansprüche**

1.  Lesevorrichtung, umfassend:

einen Platzierungsabschnitt, auf dem mehrere Dokumente platziert werden;

eine Zufuhrwalze, die die Dokumente von dem Platzierungsabschnitt zuführt;

einen Trennungsabschnitt, der die Dokumente trennt, die von der Zufuhrwalze zugeführt werden;

einen Leseabschnitt, der die Dokumente scannt, die in einer Transportrichtung transportiert werden;

einen Steuerabschnitt, der einen Transportfehler der Dokumente bestimmt; und

einen Erfassungsabschnitt, der die Dokumente erfasst, die auf dem Platzierungsabschnitt platziert sind; wobei wenn angenommen wird, dass ein Dokument, das zuerst zugeführt wird, ein vorangehendes Dokument ist, und dass ein Dokument, das nach dem vorangehenden Dokument zugeführt wird, ein nachfolgendes Dokument ist, **dadurch gekennzeichnet, dass**

der Steuerabschnitt

eine Schräglaufbeurteilung basierend auf einem Bild des vorangehenden Dokuments durchführt, das von dem Leseabschnitt gescannt wurde, wobei die Schräglaufbeurteilung bestimmt, ob ein Seitenrandteil des vorangehenden Dokuments in einen Spaltbereich verschoben ist, der zwischen der Zufuhrwalze und dem Trennungsabschnitt liegt, und

einen Transportfehler bestimmt, wenn bestimmt wird, dass der Seitenrandteil des vorangehenden Dokuments in den Spaltbereich verschoben ist und auch der Erfassungsabschnitt das nachfolgende Dokument erfasst.

2. Lesevorrichtung nach Anspruch 1, wobei

der Steuerabschnitt die Schräglaufbeurteilung basierend auf einem Bild eines Spitzenendbereichs des vorangehenden Dokuments durchführt, das von dem Leseabschnitt gescannt wurde.

3. Lesevorrichtung nach Anspruch 2, wobei

der Steuerabschnitt

basierend auf dem Bild des Spitzenendbereichs des vorangehenden Dokuments einen Neigungswinkel des vorangehenden Dokuments in Bezug auf eine Abtastrichtung und einen Spitzenendenabstand in der Abtastrichtung von dem Seitenrandteil des vorangehenden Dokuments zu dem Spaltbereich bestimmt und

die Schräglaufbeurteilung basierend auf dem Neigungswinkel und dem Spitzenendenabstand durchführt.

4. Lesevorrichtung nach Anspruch 3, wobei

der Steuerabschnitt den Neigungswinkel unter Verwendung eines Maßes korrigiert, in dem sich der Neigungswinkel des vorangehenden Dokuments laut Schätzung während des Transports ändert.

5. Lesevorrichtung nach Anspruch 1, weiter umfassend:

einen Erfassungsabschnitt für das hintere Ende, der zwischen der Zufuhrwalze und dem Leseabschnitt in der Transportrichtung bereitgestellt ist und der ein hinteres Ende des Dokuments erfasst, wobei

der Steuerabschnitt

eine Dokumentlänge, die eine Länge des vorangehenden Dokuments in der Transportrichtung von einem Spitzenende zu dem hinteren Ende des vorangehenden Dokuments ist, basierend auf einem Bild eines Spitzenendbereichs des vorangehenden Dokuments, das von dem Leseabschnitt gescannt wurde, und einem Erfassungsergebnis des Erfassungsabschnitts für das hintere Ende erhält, und

die Schräglaufbeurteilung basierend auf der Dokumentlänge durchführt.

6. Lesevorrichtung nach Anspruch 1, weiter umfassend:

einen Erfassungsabschnitt für das hintere Ende, der zwischen der Zufuhrwalze und dem Leseabschnitt in der Transportrichtung bereitgestellt ist und der ein hinteres Ende des Dokuments erfasst, wobei

der Steuerabschnitt die Schräglaufbeurteilung zu einem Zeitpunkt durchführt, zu dem der Erfassungsabschnitt für das hintere Ende das hintere Ende des vorangehenden Dokuments erfasst.

7. Lesevorrichtung nach Anspruch 1, wobei

der Steuerabschnitt

eine Position eines hinteren Endes des vorangehenden Dokuments basierend auf einem Bild, das von dem Leseabschnitt gescannt wurde, erhält und

die Schräglaufbeurteilung basierend auf der Position des hinteren Endes des vorangehenden Dokuments durchführt.

8. Lesevorrichtung nach Anspruch 1, wobei
der Steuerabschnitt eine Breite des vorangehenden Dokuments von einem Bild des vorangehenden Dokuments, das von dem Leseabschnitt gescannt wurde, erhält und, wenn bestimmt wird, dass die Breite kleiner oder gleich einem Schwellenwert ist, der Steuerabschnitt die Schräglaufbeurteilung durchführt.

9. Steuerverfahren einer Lesevorrichtung,

wobei die Lesevorrichtung enthält

einen Platzierungsabschnitt, auf dem mehrere Dokumente platziert werden,
eine Zufuhrwalze, die die Dokumente von dem Platzierungsabschnitt zuführt,
einen Trennungsabschnitt, der die Dokumente trennt, die von der Zufuhrwalze zugeführt werden,
einen Leseabschnitt, der die Dokumente scannt, die in einer Transportrichtung transportiert werden, und
einen Erfassungsabschnitt, der die Dokumente erfasst, die auf dem Platzierungsabschnitt platziert sind,

wobei das Steuerverfahren der Lesevorrichtung umfasst:

wenn angenommen wird, dass ein Dokument, das zuerst zugeführt wird, ein vorangehendes Dokument ist, und dass ein Dokument, das nach dem vorangehenden Dokument zugeführt wird, ein nachfolgendes Dokument ist,
Bestimmen, basierend auf einem Bild eines vorangehenden Dokuments, das von dem Leseabschnitt gescannt wurde, ob ein Seitenrandteil des vorangehenden Dokuments in einen Spaltbereich verschoben ist, der zwischen der Zufuhrwalze und dem Trennungsabschnitt liegt, und
Bestimmen eines Transportfehlers, wenn der Steuerabschnitt bestimmt, dass der Seitenrandteil des vorangehenden Dokuments in den Spaltbereich verschoben ist und auch der Erfassungsabschnitt das nachfolgende Dokument erfasst.

## Revendications

1. Dispositif de lecture, comprenant :

une section de placement sur laquelle une pluralité de documents sont placés ;
un rouleau d'alimentation alimentant les documents à partir de la section de placement ;
une section de séparation séparant les documents alimentés par le rouleau d'alimentation ;
une section de lecture balayant les documents transportés dans une direction de transport ;
une section de commande déterminant une erreur de transport des documents ; et
une section de détection détectant les documents placés sur la section de placement ; dans lequel
en supposant qu'un document alimenté en premier est un document précédent et qu'un document alimenté après le document précédent est un document suivant,
**caractérisé en ce que** :
la section de commande

effectue une évaluation de désalignement sur la base d'une image du document précédent balayé par la section de lecture, l'évaluation de désalignement déterminant si une partie de bord latéral du document précédent est déplacée dans une région de pincement prise en sandwich entre le rouleau d'alimentation et la section de séparation et
détermine une erreur de transport lorsque la partie de bord latéral du document précédent est déterminée comme étant déplacée dans la région de pincement et que la section de détection détecte également le document suivant.

2. Dispositif de lecture selon la revendication 1, dans lequel
la section de commande effectue l'évaluation de désalignement sur la base d'une image d'une région d'extrémité de pointe du document précédent balayé par la section de lecture.

**3.** Dispositif de lecture selon la revendication 2, dans lequel
la section de commande

calcule, sur la base de l'image d'une région d'extrémité de pointe du document précédent, un angle d'inclinaison du document précédent par rapport à une direction de balayage et une distance d'extrémité de pointe dans la direction de balayage à partir de la partie de bord latéral du document précédent jusqu'à une région de pincement et
effectue l'évaluation de désalignement sur la base de l'angle d'inclinaison et de la distance d'extrémité de pointe.

**4.** Dispositif de lecture selon la revendication 3, dans lequel
la section de commande corrige l'angle d'inclinaison à l'aide d'une quantité estimée de changement de l'angle d'inclinaison du document précédent pendant le transport.

**5.** Dispositif de lecture selon la revendication 1, comprenant en outre :

une section de détection d'extrémité arrière, laquelle est disposée entre le rouleau d'alimentation et la section de lecture dans la direction de transport et laquelle détecte une extrémité arrière du document, dans lequel
la section de commande

obtient une longueur de document, laquelle est une longueur du document précédent dans la direction de transport à partir d'une extrémité de pointe jusqu'à une extrémité arrière du document précédent, sur la base d'une image d'une région d'extrémité de pointe du document précédent balayé par la section de lecture et d'un résultat de détection de la section de détection d'extrémité arrière et
effectue l'évaluation de désalignement sur la base de la longueur de document.

**6.** Dispositif de lecture selon la revendication 1, comprenant en outre :
une section de détection d'extrémité arrière, laquelle est disposée entre le rouleau d'alimentation et la section de lecture dans la direction de transport et détecte une extrémité arrière du document, dans lequel la section de commande effectue une évaluation de désalignement à un moment où la section de détection d'extrémité arrière détecte l'extrémité arrière du document précédent.

**7.** Dispositif de lecture selon la revendication 1, dans lequel
la section de commande

obtient une position d'une extrémité arrière du document précédent sur la base d'une image balayée par la section de lecture et
effectue l'évaluation de désalignement sur la base de la position de l'extrémité arrière du document précédent.

**8.** Dispositif de lecture selon la revendication 1, dans lequel
la section de commande obtient une largeur du document précédent à partir d'une image du document précédent balayé par la section de lecture et, lorsque la largeur est déterminée comme étant inférieure ou égale à une valeur seuil, la section de commande effectue l'évaluation de désalignement.

**9.** Procédé de commande d'un dispositif de lecture,

le dispositif de lecture incluant

une section de placement sur laquelle une pluralité de documents sont placés,
un rouleau d'alimentation alimentant les documents à partir de la section de placement,
une section de séparation séparant les documents alimentés par le rouleau d'alimentation,
une section de lecture balayant les documents transportés dans une direction de transport, et une section de détection détectant les documents placés sur la section de placement,

le procédé de commande du dispositif de lecture comprenant :

en supposant qu'un document alimenté en premier est un document précédent et qu'un document alimenté après le document précédent est un document suivant,
la détermination, sur la base d'une image d'un document précédent balayé par la section de lecture, si une partie de bord latéral du document précédent est déplacée dans une région de pincement prise en sandwich par le rouleau d'alimentation et la section de séparation et

la détermination d'une erreur de transport lorsque la section de commande détermine que la partie de bord latéral du document précédent est déplacée dans la région de pincement et que la section de détection détecte également le document suivant.

FIG. 1

FIG. 2

FIG. 3

START

S101
CALCULATE TILT ANGLE

S102
CALCULATE WIDTH OF
PRECEDING DOCUMENT

S103
WIDTH OF PRECEDING
DOCUMENT ≤
WIDTH THRESHOLD? —NO

YES

S106
RIGHT-SIDE FIRST? —NO

YES

S104
TILT ANGLE ≥
TILT THRESHOLD? —NO

YES
S105
TRANSPORT ERROR

S107
CALCULATE LEFT TIP
END DISTANCE

S108
CALCULATE RIGHT TIP
END DISTANCE

END

S109
CALCULATE
PRECEDING LENGTH

S110
CALCULATE
ALLOWABLE DISTANCE

S111
DETECT REAR END? —NO

YES

S114
CALCULATE
DOCUMENT LENGTH

S115
ALLOWABLE DISTANCE ≤
DOCUMENT LENGTH -
PRECEDING LENGTH —NO

YES

S116
SUBSEQUENT
DOCUMENT? —NO

YES

S112
TRANSPORT DISTANCE ≥
ALLOWABLE DISTANCE? —NO

YES
S113
TRANSPORT ERROR

S117
TRANSPORT ERROR

END

FIG. 4

20

FIG. 5

**EP 4 407 972 B1**

## REFERENCES CITED IN THE DESCRIPTION

### Patent documents cited in the description

- JP 2019075600 A

- US 2015373219 A